# EUROPÄISCHE PATENTSCHRIFT

(11) **EP 3 033 195 B1**
(45) Veröffentlichungstag und Bekanntmachung des Hinweises auf die Patenterteilung: **06.11.2019**
(21) Anmeldenummer: 13799177.4
(22) Anmeldetag: 20.11.2013
(51) Int. Cl.: B23F 19/05

(54) **MASCHINE ZUM ZAHNRADHONEN**
MACHINE FOR HONING GEARS
MACHINE PERMETTANT LE PIERRAGE D'UNE ROUE DENTÉE

(30) Priorität: 12.08.2013 CH 13792013
(43) Veröffentlichungstag der Anmeldung: 22.06.2016
(73) Patentinhaber: Gleason Switzerland AG, 2557 Studen (CH)
(72) Erfinder: BRANDSBERG, Frederik, CH-8055 Rich (CH); BERNHARDSGRÜTTER, Urs, CH-8332 Russikon (CH)
(74) Vertreter: Leinweber & Zimmermann
(86) Internationale Anmeldenummer: PCT/CH2013/000202
(87) Internationale Veröffentlichungsnummer: WO 2015/021566

(56) Entgegenhaltungen:
- DE-A1-102005 005 993
- DE-C2- 4 329 822
- DE-U1-202011 051 332

## Beschreibung

### Technisches Gebiet

Die Erfindung betrifft eine Maschine zum Zahnradhonen, umfassend eine Werkstückspindel, deren Spindelachse vertikal orientiert ist, wobei im Bereich eines freien Endes der Werkstückspindel ein zu bearbeitendes Werkstück anbringbar ist, einen Honringträger, in welchen ein Honring zur Bearbeitung des an der Werkstückspindel angebrachten Werkstücks einspannbar und um seine zentrale Achse drehend antreibbar ist, und ein Maschinengestell, an welchem die Werkstückspindel und der Honringträger gelagert sind, wobei das Maschinengestell den Honringträger umgibt, und wobei der Honringträger an zwei bezüglich des Honringträgers im Wesentlichen diametral gegenüberliegenden Lagerstellen des Maschinengestells um eine horizontale Achse, welche durch die Lagerstellen verläuft, rotativ beweglich gelagert ist. Siehe, zum Beispiel DE 10 2005 005993 A1.

### Stand der Technik

Derartige Maschinen zum Zahnradhonen sind bekannt. Bei der Fertigung von aussen verzahnten Zahnrädern wälzt sich nach der Grundprofilierung des Werkstücks ein Honring unter versetzten Achsen mit dem zu bearbeitenden Werkstück ab. Derartige Honmaschinen werden u. a. für die Massenfertigung von Zahnrädern für Antriebskomponenten von Fahrzeugen wie z. B. Personen- und Lastwagen eingesetzt. Gegenüber geschliffenen Zahnrädern zeichnen sich gehonte Zahnräder durch ihr vorteilhaftes Geräuschverhalten und geringen Verschleiss aus. Beim Honen werden tiefe Schnittgeschwindigkeiten eingesetzt, wodurch die thermische Belastung des Werkstücks gering gehalten werden kann.

Die DE 43 29 822 C2 (Honda) zeigt eine Zahnrad-Feinbearbeitungsvorrichtung mit einem Gestell mit einem horizontal verlaufenden Führungsteil, einer Schleifscheiben-Trageinheit mit einem Schleifscheibenkopf, welcher eine ringförmige Schleifscheibe in Form eines Innenzahnrades trägt, wobei die Trageinheit um eine horizontale Achse drehbar und feststellbar ist. Die Schleifscheiben-Trageinheit ist zudem längs des horizontal verlaufenden Führungsteils in Richtung der Schleifscheibenkopf-Drehachse mittels eines Antriebs verschiebbar. Die Vorrichtung umfasst weiter eine Werkstück-Trageinheit mit einer Spindel zum Halten eines aussenverzahnten Zahnrad-Werkstücks, wobei diese Trageinheit in Richtung der Achse des Werkstücks W verschiebbar geführt ist. Das Gestell ist beispielsweise ein rechteckförmiges Parallelepiped, wobei die Werkstück-Trageinheit an einer Seitenfläche desselben angebracht ist. Es weist weiter ein vertikal verlaufendes Führungsteil für die Verschiebung der Werkstück-Trageinheit auf.

Die bekannten Maschinen haben zumeist einen aufwändigen Aufbau. Sie sind entsprechend teuer und benötigen ein grosses Stellvolumen.

### Darstellung der Erfindung

Aufgabe der Erfindung ist es, eine dem eingangs genannten technischen Gebiet zugehörende Maschine zum Zahnradhonen zu schaffen, welche einen einfachen und platzsparenden Aufbau aufweist.

Die Lösung der Aufgabe ist durch die Merkmale des Anspruchs 1 definiert. Gemäss der Erfindung umgibt das Maschinengestell den Honringträger, und der Honringträger ist an zwei bezüglich des Honringträgers im Wesentlichen diametral gegenüberliegenden Lagerstellen des Maschinengestells entlang einer horizontalen Achse, welche durch die Lagerstellen verläuft, linear beweglich und um diese Achse rotativ beweglich gelagert.

Die erfindungsgemässe Lösung ermöglicht einen einfachen und kompakten Aufbau der Honmaschine. Im Unterschied zu beispielsweise der DE 43 29 822 C2 lässt sich die Lagerung des Honringträgers aufgrund der beidseitigen Abstützung mit geringeren Dimensionen ausführen. Die erfindungsgemässe Anordnung des Honringträgers ermöglicht ein einfaches Abschliessen des Arbeitsraums, insbesondere gegen den Austritt von Schmierstoffen und Spänen. Das Maschinengestell dient nicht nur als strukturelles Element zur Lagerung der einzelnen Komponenten der Maschine und aller benötigten Achsen, sondern zumindest teilweise auch zur Bildung eines Arbeitsraums, in welchem die Bearbeitung stattfindet.

Zum Honen von Innenverzahnungen lässt sich im Honringträger auch das zu bearbeitende Werkstück und im Gegenzug auf der Werkstückspindel das (aussen profilierte) Honwerkzeug (abrasives Zahnrad) einspannen.

Bevorzugt ist das freie Ende der Werkstückspindel nach oben gerichtet, und die Werkstückspindel ist vom Maschinengestell umgeben. Auf diese Weise ist auch die Spindel innerhalb des Maschinengestells aufgenommen und von diesem umgeben. Aufwändige und Platz beanspruchende Aufbauten für die Spindellagerung erübrigen sich. Ferner lassen sich die Werkstücke auf einfache Weise von oben wechseln, z. B. indem sie durch den Honringträger hindurch von der Werkstückspindel entnommen oder auf diese aufgespannt werden.

Aufgrund der erfindungsgemässen Anordnung der Achsen müssen diese nur geringe Hübe ausführen. Entsprechend können kostengünstige, zuverlässige und kompakte Bauteile eingesetzt werden.

Mit Vorteil ist ein Antrieb für die Werkstückspindel unterhalb des freien Endes der Werkstückspindel, z. B. am unteren Ende der Werkstückspindel, angeordnet. Dadurch ergibt sich ein einfacher und stabiler Aufbau. Als Antrieb wird beispielsweise ein Direktantrieb verwendet. Alternativ ist der Antrieb seitlich der Werkstückspindel angeordnet und die Übertragung zur Spindel erfolgt beispielsweise über einen Zahnrad- oder Riemenantrieb.

In alternativen Ausführungsformen kann die Spindel oben angeordnet sein, so dass das freie Ende der Werkstückspindel nach unten gerichtet ist. Die Spindel kann an einem Träger angeordnet sein, welcher seitlich am den Honringträger umgebenden Maschinengestell oder an einem zusätzlichen Element gelagert ist. Der Antrieb ist dann z. B. am oberen Ende der Werkstückspindel angeordnet.

Vorzugsweise bildet das Maschinengestell eine im Wesentlichen geschlossene Hülle, welche einen Arbeitsraum umschliesst. Insbesondere ist die Hülle derart ausgebildet, dass das Austreten von Schmierstoffen oder Spänen zuverlässig verhindert wird. Gleichzeitig verhindert sie Personenkontakt, welcher zu Verletzungen führen könnte. Dadurch erübrigen sich den Honringträger umgebende weitere Abschirmungen weitgehend. Das Maschinengestell ist beispielsweise nach unten und mantelseitig abgeschlossen und weist zum Arbeitsraum nur oben eine Öffnung auf. Durch diese Öffnung ist sowohl der Honringträger zugänglich, z. B. zum Wechseln der zu bearbeitenden Werkstücke und des Honrings, als auch die Werkstückspindel. Das Maschinengestell kann zudem weitere Öffnungen, insbesondere zu Wartungszwecken aufweisen.

Insbesondere ist das Maschinengestell derart ausgebildet, dass der Arbeitsraum für den Betrieb der Maschine durch einen planen Deckel oben abschliessbar ist. Durch ein einfaches Auflegen oder Einschieben des Deckels wird der Arbeitsraum so vollständig abgeschlossen. Da der Deckel keinerlei statische Funktion hat, kann er leicht und kostengünstig ausgebildet werden. Bevorzugt ist am Maschinengestell eine Aufnahme ausgebildet, in welche der Deckel passend eingelegt oder eingeführt werden kann.

Alternativ können auch Verschlusselemente mit einer anderen, z. B. gewölbten, Geometrie eingesetzt werden, oder das Maschinengestell umfasst bewegliche Elemente, welche einen Zugriff auf den Honringträger ermöglichen.

Bevorzugt ist das Maschinengestell geradzylindrisch, insbesondere kreiszylindrisch, ausgebildet. Die Form eines geraden Kreiszylinders ermöglicht eine kompakte und zugleich stabile Geometrie. Andere Formen der Grundfläche des geraden Zylinders, wie z. B. Quadrate, Rechtecke, Polygone mit höheren Eckenzahl oder Ellipsen, sind ebenfalls möglich.

Bevorzugt umfassen die Lagerstellen Gleitlager bzw. hydrostatische Lager. Dadurch lässt sich die erfindungsgemässe Maschine kostengünstig und wartungsarm realisieren. Die Gleitlager weisen zudem eine hohe Steifigkeit und eine hohe Dämpfung auf. Mit Vorteil werden die Gleitlager durch Gleitbüchsen gebildet, die in entsprechende Öffnungen des Maschinengestells eingesetzt und mit Dichtungen gegen Verschmutzungen versehen sind. Mit den Gleitbüchsen können beispielsweise entsprechend dimensionierte Tragelemente, z. B. Stahlrohre, zusammenwirken, weiche beidseitig des Honringträgers in der horizontalen Achse verlaufen, den Honring somit gleichzeitig tragen und auch entlang seiner linearen Bewegungsachse führen. Vorzugsweise ermöglichen die Gleitlager sowohl diese horizontale Bewegung als auch die rotative Bewegung des Honringträgers um die horizontale Achse, dienen also als Radiallager mit zwei Freiheitsgraden, einem linearen und einem rotativen Freiheitsgrad.

Besonders bevorzugt sind die Tragelemente derart am Honringträger angebracht, dass sie in ihrer Verlängerung durch den Mittelpunkt des Honringträgers verlaufen. Dies ermöglicht eine besonders einfache und stabile Konstruktion.

Alternativ werden anstelle von Gleitlagern z. B. Wälzlager eingesetzt. Die Träger können auch bei der Verwendung von Wälzlagern gemäss der vorstehend skizzierten Geometrie ausgebildet sein. Die rotative Beweglichkeit kann unabhängig von den Lagerstellen des Maschinengestells realisiert werden, z. B. indem die Träger drehfeste und relativ dazu um die Längsachse der Träger verdrehbare Abschnitte aufweisen.

Eine weitere Möglichkeit ist der Einsatz von Kugelbüchsen. So können - wie bei Gleitlagern - beide Bewegungsrichtungen mit derselben Lagereinheit zur Verfügung gestellt werden.

Bei einer bevorzugten Ausführungsform umfasst die Maschine einen Träger, auf welchem ein erster Antrieb für eine lineare Bewegung des Honringträgers entlang der durch die Lagerstellen verlaufenden horizontalen Achse und ein zweiter Antrieb für eine rotative Bewegung des Honringträgers um diese Achse angeordnet sind. Der Träger ist ausserhalb des Maschinengestells angeordnet und zusammen mit dem Honringträger entlang der horizontalen Achse verschiebbar. Das entsprechende Tragelement für den Honringträger ist mit Vorteil in axialer Richtung fest mit dem Träger, jedoch um seine Längsachse gegenüber dem Träger in einem gewissen Winkelbereich verdrehbar.

Die ausserhalb des Maschinengestells angeordneten Antriebe sind von Einflüssen des Bearbeitungsvorgangs geschützt und interferieren nicht mit der Werkstückspindel oder dem Honringträger. Durch die mitlaufende Anordnung der Antriebe ergibt sich eine einfache Kraftübertragung auf die zu betätigenden Achsen. Weil der Weg des Trägers und damit auch der mitbewegten Antriebe (z. B. Servomotoren) gering ist, kann deren Energieversorgung und Steuerung auf einfache Weise durch normale flexible Leiter erfolgen.

Mit Vorteil ist der erste Antrieb an eine Kugelumlaufspindel gekoppelt, wobei die Kugelumlaufspindel am Maschinengestell abgestützt ist. Dadurch ergibt sich eine einfache und zuverlässige lineare Verstellmöglichkeit für die Tragelemente des Honringträgers. Der erste Antrieb ist beispielsweise über ein Getriebe mit der Kugelumlaufspindel verbunden, letztere kann sich durch eine entsprechende Öffnung in den Innenraum des Maschinengestells erstrecken. Beim Getriebe kann es sich beispielsweise um ein Planetengetriebe oder ein Harmonic-Drive-Getriebe handeln.

Alternativ erfolgt eine andere Übertragung, z. B. direkt, über einen Zahnriemen, eine andersartige Spindel oder eine Zahnstange. Schliesslich ist auch die Verwendung eines Linearmotors möglich.

Bevorzugt ist weiter ein Führungselement am Träger fest angeordnet, wobei das Führungselement mit einer weiteren Lagerstelle des Maschinengestells zusammenwirkt. Dieses Führungselement stellt eine Verdrehsicherung für den Träger dar, so dass der zweite Antrieb für die Drehbewegung des Tragelements auf einfache Weise am Träger abgestützt werden kann.

Mit Vorteil ist das Maschinengestell im Wesentlichen aus Kunststein hergestellt. Ein derartiges Gestell ist kostengünstig herstellbar und bildet eine stabile Grundlage für die erfindungsgemässe Maschine.

In weiteren bevorzugten Ausführungsformen ist das Maschinengestell im Wesentlichen aus Stahl hergestellt. Diese Materialwahl ermöglicht eine besonders kompakte Ausführung der Maschine. Für den Mantel des Maschinengestells geeignete Stahlrohre sind zudem zu verhältnismässig geringen Kosten im Markt erhältlich.

Das Maschinengestell kann beispielsweise auch aus Granit oder einer Kombination der genannten Materialien hergestellt sein.

Bevorzugt kann die Werkstückspindel einen vertikalen Hub ausführen. Ohne dass der im Honringträger eingespannte Honring in vertikaler Richtung bewegt werden müsste, kann so die im Honprozess benötigte Pendelbewegung zwischen Honring und Werkstück bewirkt werden. Die entsprechende Amplitude ist klein, in der Regel höchstens einige mm. Die Werkstückspindel selbst kann den vertikalen Hub bereitstellen, oder die Werkstückspindel ist an einem Wagen angeordnet, welcher auf einer linearen Führung angehoben bzw. abgesenkt werden kann.

Mit Vorteil ist die Werkstückspindel in vertikaler Richtung verstellbar und einer gewünschten Vertikalposition feststellbar. Im Unterschied zum vorstehend erwähnten Pendelhub, bei welchem es sich um eine dynamische Achse mit sehr geringem Hub handelt, kann so die Werkstückspindel für unterschiedliche Bearbeitungsvorgänge und Werkstückgeometrien unterschiedlich eingestellt werden. Der entsprechende Hub kann beispielsweise einige cm betragen. Die Hub- und die Verstellachse können durch denselben Mechanismus oder unterschiedliche Mechanismen bereitgestellt werden. Beide Achsen können beispielsweise durch einen entlang einer linearen Achse beweglichen Schlitten realisiert werden, auf welchem die Werkstückspindel angeordnet ist. Die Positionierung des Schlittens erfolgt über einen Antrieb, dieser kann beispielsweise stationär am Maschinengestell angeordnet sein und über eine Kugelumlaufspindel auf den Schlitten wirken. Alternativ sind mehrere Antriebe vorhanden, gesondert für die statische Höhenverstellung und den dynamischen Pendelhub.

Mit Vorteil ist die Werkstückspindel in horizontaler Richtung fest angeordnet. Die notwendigen Zustellbewegungen werden durch die horizontale Bewegung des Honringträgers bewirkt. Dadurch wird die Konstruktion der Maschine so einfach wie möglich gehalten.

Bei einer bevorzugten Ausführungsform ist ein Reitstock zum Zusammenwirken mit der Werkstückspindel vorhanden. Dieser ermöglicht eine zusätzliche Abstützung der Werkstückspindel und ist vor allem dann angezeigt, wenn im Rahmen des Bearbeitungsvorgangs starke radiale Kräfte auf das Werkstück einwirken und/oder bei einer grossen Werkstücklänge. Ansonsten kann sich der Einsatz eines Reitstockes erübrigen.

Mit Vorteil ist der Reitstock kraftabhängig, z. B. federnd, gelagert, und im Betrieb der Maschine erfolgt keine mechanische Kopplung zwischen Reitstock und Werkstückspindel. Dies ermöglicht ein einfaches Koppeln und Lösen der Verbindung zwischen Reitstock und Spindel, z. B. im Rahmen eines Werkstück- und/oder Werkzeugwechsels.

Besonders bevorzugt ist die Lagerung kraft-, aber nicht wegabhängig. Der Reitstock muss somit nicht mit der höhenverstellbaren Werkstückspindel gekoppelt werden. Dadurch lässt sich der Aufbau sehr einfach realisieren.

Bei einer bevorzugten Ausführungsform ist der Reitstock mit dessen Spitze am Maschinengestell schwenkbar befestigt. Bei Gebrauch kippt der Reitstock über die Honspindel. Die Reitstockspitze ist linear gelagert und wird mit einer definierten Kraft gegen die Werkstückspindel gedrückt. Die Kraft kann pneumatisch, hydraulisch, elektrisch oder mittels einer Feder oder Gegengewichten (Hebel, Seilzug usw.) erzeugt werden.

Je nach auftretenden Drehmomenten und der Dimensionierung der Werkstückspindel kann sich der Einsatz eines Reitstocks erübrigen, wodurch die Konstruktion der Maschine so einfach wie möglich gehalten werden kann und die Zugänglichkeit des Honringträgers und der Werkstückspindel in keiner Weise behindert wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht einer Ausführungsform der erfindungsgemässen Maschine zum Zahnradhonen;
- Fig. 2: eine Seitenansicht der Maschine;
- Fig. 3: eine Draufsicht der Maschine;
- Fig. 4: einen vertikalen Querschnitt durch die Maschine; und
- Fig. 5A, B: Schrägansichten der Maschine aus verschiedenen Betrachtungswinkeln, mit transparent dargestelltem Maschinengestell.

Grundsätzlich sind in den Figuren gleiche Teile mit gleichen Bezugszeichen versehen.

### Wege zur Ausführung der Erfindung

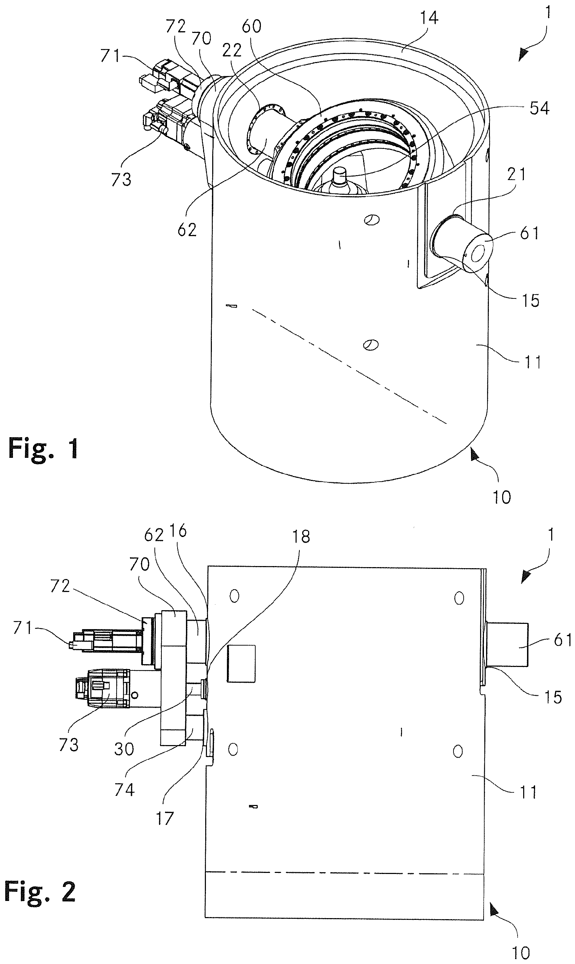

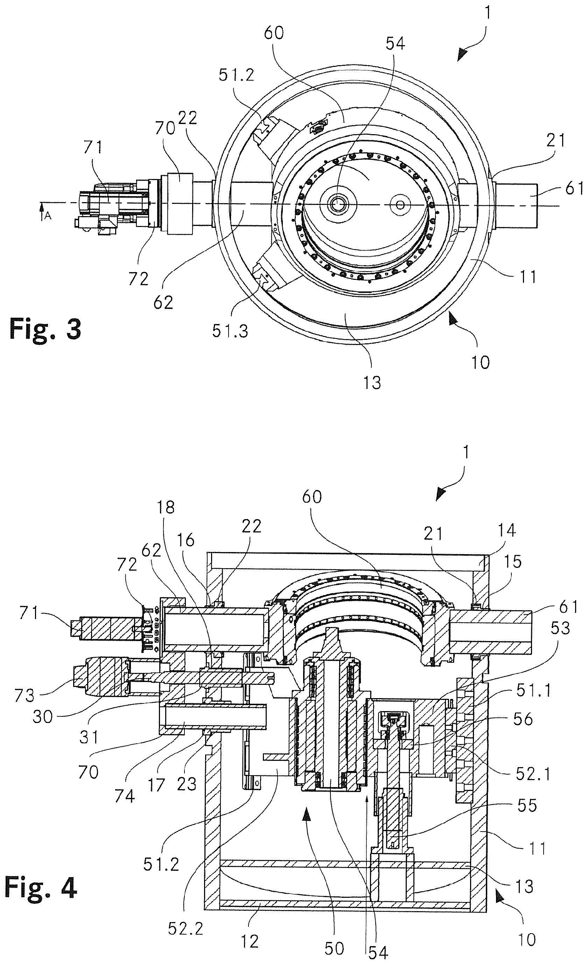

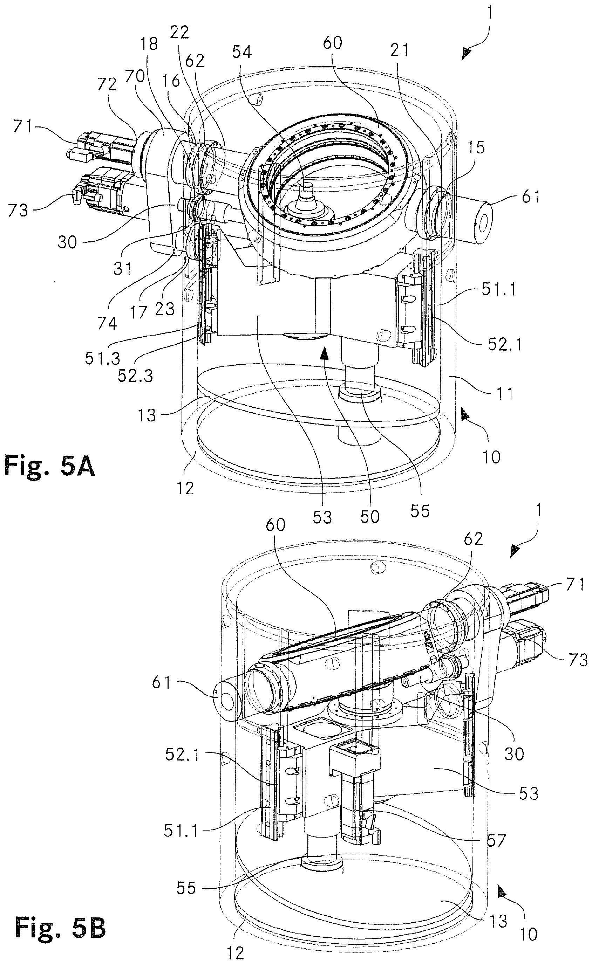

Ein Ausführungsbeispiel der erfindungsgemässen Maschine zum Zahnradhonen ist in den Figuren 1 - 5 dargestellt. Die Figur 1 zeigt eine Schrägansicht der Maschine, die Figur 2 eine Seitenansicht, die Figur 3 eine Draufsicht, die Figur 4 einen vertikalen Querschnitt durch die Maschine und die Figuren 5A, 5B zwei Schrägansichten der Maschine aus verschiedenen Betrachtungswinkeln, mit transparent dargestelltem Maschinengestell.

Die Maschine 1 umfasst ein Maschinengestell 10. Dessen Mantel 11 ist durch ein kreiszylindrisches Stahlrohr gebildet. Der kreisförmige Boden 12 wird durch eine entsprechend geformte und im Rohr horizontal befestigte Stahlplatte gebildet. Oberhalb des Bodens 12 ist eine weitere, dünnere Stahlplatte 13 im Mantel 11 befestigt. Diese dünnere Stahlplatte 13 ist schräg zum Boden 12 orientiert und hat entsprechend eine elliptische Form, so dass sie den Mantel 11 des Maschinengestells 10 ausfüllt. Die dünnere Stahlplatte 13 nimmt Schmierstoffe und Späne auf, wonach sich diese aufgrund der Schwerkraft auf der Stahlplatte 13 nach unten bewegen und am unteren Ende der Platte aufgefangen und ggf. weggeführt werden können.

Der Mantel 11 des Maschinengestells 10 weist am oberen Ende eine umlaufende Aufnahmenut 14 auf, die durch eine innenliegende, in die Stirnseite mündende Ausnehmung gebildet ist. In diese Aufnahmenut 14 lässt sich von oben ein flacher kreiszylindrischer Deckel einsetzen, um den durch das Maschinengestell 10 gebildeten Aufnahmeraum abzuschliessen. Der Deckel kann aus einem transparenten Material gefertigt sein, so dass eine visuelle Kontrolle des Bearbeitungsvorgangs möglich bleibt.

Im Maschinengestell 10 sind vier runde Öffnungen 15, 16, 17, 18 ausgebildet, deren Achsen jeweils horizontal und senkrecht zur Mantelfläche des Mantels 11 verlaufen. Die zwei Öffnungen 15, 16 liegen sich diametral gegenüber, deren Achsen fallen zusammen. Sie weisen jeweils eine Stufe ungefähr bei halber Manteldicke auf, wobei sich von aussen nach innen der Querschnitt der Öffnungen 15, 16 bei der Stufe erweitert. In die Öffnungen 15, 16 sind Gleitbüchsen 21, 22 eingesetzt. Die Aussenkontur der Gleitbüchsen 21, 22 sind an die Innenkontur der Öffnungen 15, 16 mit den Stufen angepasst. Die Gleitbüchsen 21, 22 und deren Funktion sind weiter unten näher beschrieben.

Die Öffnung 17 ist vertikal unterhalb der Öffnung 16 angeordnet. Sie weist bei ungefähr halber Manteldicke ebenfalls eine Stufe auf, wobei sich dort aber von aussen nach innen der Querschnitt verringert. In die Öffnung 17 ist ebenfalls eine Gleitbüchse 23 eingesetzt. Der Durchmesser der Öffnung 17 und der Gleitbüchse 23 ist geringer als derjenige der Öffnungen 15, 16.

Die letzte Öffnung 18 befindet sich auf der Verbindungslinie zwischen den Zentren der untereinander angeordneten Öffnungen 16, 17. Ihr Durchmesser ist noch etwas geringer als derjenige der unteren Öffnung 17. In die mittlere Öffnung 18 ist die Mutter 31 einer Kugelumlaufspindel 30 eingesetzt.

Im Maschinengestell 10 ist eine Werkstückspindeleinrichtung 50 gelagert. Diese umfasst drei innen am Mantel 11 des Maschinengestells 10 befestigte, vertikal verlaufende Führungsschienen 51.1, 51.2, 51.3. Die erste Führungsschiene 51.1 ist direkt unterhalb der einzelnen runden Öffnung 15 angeordnet, die weiteren zwei Führungsschienen 51.2, 51.3 sind in Bezug auf ihre Winkelposition symmetrisch zu den drei weiteren Öffnungen 16, 17, 18 angeordnet, der Winkel zur Achse der Öffnungen 15, 16, 17, 18 beträgt je ca. 40°. Mit jeder der Schienen 51.1...3 wirkt je ein Laufwagen 52.1, 52.2, 52.3 zusammen, wobei jeder der Laufwagen 51.1...3 je zwei Rolleneinheiten aufweist, die in an sich bekannter Weise mit der Aussenprofilierung der Schiene 51.1...3 zusammenwirken.

Die Laufwagen 51.1...3 sind an einem Spindelträger 53 fest angebracht. Dieser ist in der Draufsicht im Wesentlichen Y-förmig, wobei sich die drei Schenkel zu den jeweiligen Laufwagen 51.1...3 erstrecken. In einer zentralen Öffnung des Spindelträgers 53 ist die Werkstückspindel 54 gelagert. Es handelt sich dabei um eine an sich bekannte Spindel mit Direktantrieb. Das freie Ende der Werkstückspindel 54 umfasst Kopplungsmittel zur direkten oder indirekten Befestigung des Werkstücks.

Die Mutter 56 einer Kugelumlaufspindel 55 ist ebenfalls im Spindelträger 53 gelagert. Die Kugelumlaufspindel erstreckt sich vom Spindelträger 53 vertikal nach unten und verläuft durch eine Öffnung in der schräg orientierten Stahlplatte 13, ihr unteres Ende ist am Boden 12 des Maschinengestells 10 abgestützt. Der Antrieb der Kugelumlaufspindel 55 erfolgt über einen Zahnriemen durch einen Motor 57, welcher aussen am Spindelträger 53 angeflanscht ist und sich mit diesem in vertikaler Richtung auf und ab bewegt.

Die Werkstückspindel 54 kann mittels einer linearen Bewegung der Laufwagen 51.1...3 gegenüber den Führungsschienen 51.1...3 in vertikaler Richtung bewegt werden, so dass das freie Ende der Werkstückspindel 54 mit den Kopplungsmitteln jede benötigte Ebene innerhalb der Honringaufnahme (siehe unten) erreichen kann. Während des Honvorgangs führt die Werkstückspindel 54 dynamisch einen Pendelhub mit einer Amplitude von beispielsweise ca. 2 mm aus. Ferner kann sie in einem Bereich von ca. 60 mm in der Arbeitshöhe verstellt werden (statisch). Beide Bewegungen werden vom Motor 57 über die Kugelumlaufspindel 55 bewirkt.

In den in den Öffnungen 15, 16, 17 des Maschinengestells 10 aufgenommenen Gleitbüchsen 21, 22, 23 ist die Trageinrichtung für einen Honringträger 60 gelagert. Der Honringträger ist in an sich bekannter Weise torusförmig ausgebildet, er umfasst eine Aufnahme für einen Honring, welche über einen Direktantrieb in eine Drehbewegung um die Torusachse versetzt werden kann. Die Trageinrichtung umfasst zwei Stahlrohre 61, 62, die diametral gegenüberliegend am Aussenmantel des Honringträgers 60 befestigt sind. Die Stahlrohre 61, 62 erstrecken sich vom Honringträger 60 beidseitig durch die entsprechenden Öffnungen 15, 16 im Maschinengestell 10 nach aussen. Ihre Aussendimensionen sind so gewählt, dass sie passgenau mit den entsprechenden Gleitbüchsen 21, 22 zusammenwirken können. Während das mit der einzelnen Öffnung 15 zusammenwirkende Stahlrohr 61 an seinem aussenliegenden Ende frei ist, ist das aussenliegende Ende des diametral gegenüberliegenden Stahlrohrs 62 an einem Antriebsträger 70 gelagert. Die Lagerung ist so ausgeführt, dass sich das Stahlrohr 62 um seine Längsachse gegenüber dem Antriebsträger 70 verdrehen lässt, dass jedoch das Stahlrohr 62 in axialer Richtung gegenüber dem Antriebsträger 70 fest ist.

Mit der Längsachse des Stahlrohrs 62 fluchtet die Abtriebsachse eines auf der radial äusseren Seite des Antriebsträgers 70 befestigten und gegenüber diesem abgestützten Servomotors 71. Die Abtriebsachse wirkt über ein Robotergetriebe 72 auf das Stahlrohr 62 und vermag somit dieses relativ zum Antriebsträger 70 zu verdrehen. Entsprechend ergibt sich eine veränderte Winkelstellung des Honringträgers 60 um die gemeinsamen Längsachsen der beiden Stahlrohr 61, 62.

Ein weiterer Servomotor 73 ist ebenfalls auf der äusseren Seite des Antriebsträgers 70 befestigt und gegenüber diesem abgestützt. Der weitere Servomotor 73 wirkt über eine Kupplung mit der Kugelumlaufspindel 30 zusammen, die wiederum mit der oben erwähnten, in die mittlere Öffnung 18 eingesetzten Mutter 31 zusammenwirkt. Durch Betätigen des Servomotors 73 kann der Antriebsträger 70 gegenüber dem Maschinengestell 10 in horizontaler Richtung radial nach innen bzw. nach aussen verschoben werden. Entsprechend ändert die Position des Honringträgers 60.

Schliesslich ist ein weiteres Stahlrohr 74 fix am Antriebsträger 70 befestigt. Es erstreckt sich horizontal und radial nach innen durch die untere Öffnung 17 hindurch in den Innenraum des Maschinengestells 10. Dieses Stahlrohr 74 dient zur Verdrehsicherung und Abstützung, insbesondere für das mittels des Servomotors 71 auf das Stahlrohr 62 ausgeübte Drehmoment.

Die Erfindung ist nicht auf das dargestellte Ausführungsbeispiel beschränkt. So kann insbesondere die Geometrie der einzelnen Komponenten, z. B. des Maschinengestells, des Antriebsträgers, der Honringaufnahme oder des Spindelträgers anders gewählt werden. Die Antriebe können anders ausgebildet oder anders angeordnet sein.

Anstatt über am Maschinengestell befestigte Schienen kann der Spindelträger z. B. auch gegenüber Führungen vertikal verschiebbar sein, die auf einer am Maschinengestell befestigten, sich nach innen erstreckenden Tragestruktur angeordnet sind. Die Führungen können z. B. durch Führungsrohre und Gleitbuchsen realisiert sein. Der Antrieb für die Vertikalbewegung der Spindel kann ebenfalls an der Tragestruktur, d. h. im Unterschied zum oben dargestellten Ausführungsbeispiel ortsfest, angeordnet sein.

Zusammenfassend ist festzustellen, dass durch die Erfindung eine Maschine zum Zahnradhonen geschaffen wird, welche einen einfachen und platzsparenden Aufbau aufweist.

## Patentansprüche

1. Maschine zum Zahnradhonen, umfassend
a) eine Werkstückspindel (54), deren Spindelachse vertikal orientiert ist, wobei im Bereich eines freien Endes der Werkstückspindel (54) ein zu bearbeitendes Werkstück anbringbar ist;
b) einen Honringträger (60), in welchen ein Honring zur Bearbeitung des an der Werkstückspindel angebrachten Werkstücks einspannbar und um seine zentrale Achse drehend antreibbar ist;
c) ein Maschinengestell (10), an welchem die Werkstückspindel und der Honringträger gelagert sind; wobei
d) das Maschinengestell (10) den Honringträger (60) umgibt und
e) der Honringträger an zwei bezüglich des Honringträgers im Wesentlichen diametral gegenüberliegenden Lagerstellen (21,22) des Maschinengestells um eine horizontale Achse, welche durch die Lagerstellen verläuft, rotativ beweglich gelagert ist; **dadurch gekennzeichnet, dass** der Honringträger (60) an die zwei bezüglich des Honringträgers im Wesentlichen diametral gegenüberliegenden Lagerstellen (21,22) des Maschinengestells (10), entlang der horizontalen Achse, welche durch die Lagerstellen (21,22) verläuft, linear beweglich gelagert ist.

2. Maschine nach Anspruch 1, **dadurch gekennzeichnet, dass** das freie Ende der Werkstückspindel nach oben gerichtet ist und dass die Werkstückspindel vom Maschinengestell umgeben ist.

3. Maschine nach Anspruch 2, **dadurch gekennzeichnet, dass** ein Antrieb (57) für die Werkstückspindel unterhalb des freien Endes der Werkstückspindel angeordnet ist.

4. Maschine nach einem der Ansprüche 1 bis 3, **dadurch gekennzeichnet, dass** das Maschinengestell eine im Wesentlichen geschlossene Hülle bildet, welche einen Arbeitsraum umschliesst.

5. Maschine nach den Ansprüchen 3 und 4, **dadurch gekennzeichnet, dass** das Maschinengestell derart ausgebildet ist, dass der Arbeitsraum für den Betrieb der Maschine durch einen planen Deckel oben abschliessbar ist.

6. Maschine nach einem der Ansprüche 1 bis 5, **dadurch gekennzeichnet, dass** das Maschinengestell geradzylindrisch, insbesondere kreiszylindrisch, ausgebildet ist.

7. Maschine nach einem der Ansprüche 1 bis 6, **dadurch gekennzeichnet, dass** die Lagerstellen Gleitlager bzw. hydrostatische Lager umfassen.

8. Maschine nach einem der Ansprüche 1 bis 7, **gekennzeichnet durch** einen Träger (70), auf welchem ein erster Antrieb (73) für eine lineare Bewegung des Honringträgers entlang der durch die Lagerstellen verlaufenden horizontalen Achse und ein zweiter Antrieb (71) für eine rotative Bewegung des Honringträgers um diese Achse angeordnet sind, wobei der Träger ausserhalb des Maschinengestells angeordnet und zusammen mit dem Honringträger entlang der horizontalen Achse verschiebbar ist.

9. Maschine nach Anspruch 8, **dadurch gekennzeichnet, dass** der erste Antrieb an eine Kugelumlaufspindel (30) gekoppelt ist, wobei die Kugelumlaufspindel am Maschinengestell abgestützt ist.

10. Maschine nach Anspruch 8 oder 9, **dadurch gekennzeichnet, dass** ein Führungselement am Träger fest angeordnet ist, wobei das Führungselement mit einer weiteren Lagerstelle (23) des Maschinengestells zusammenwirkt.

11. Maschine nach einem der Ansprüche 1 bis 10, **dadurch gekennzeichnet, dass** das Maschinengestell im Wesentlichen aus Kunststein hergestellt ist.

12. Maschine nach einem der Ansprüche 1 bis 11, **dadurch gekennzeichnet, dass** das Maschinengestell im Wesentlichen aus Stahl hergestellt ist.

13. Maschine nach einem der Ansprüche 1 bis 12, **dadurch gekennzeichnet, dass** die Werkstückspindel einen vertikalen Hub ausführen kann.

14. Maschine nach einem der Ansprüche 1 bis 13, **dadurch gekennzeichnet, dass** die Werkstückspindel in vertikaler Richtung verstellbar und in einer gewünschten Vertikalposition feststellbar ist.

15. Maschine nach einem der Ansprüche 1 bis 14, **gekennzeichnet durch** einen Reitstock zum Zusammenwirken mit der Werkstückspindel.

16. Maschine nach Anspruch 15, **dadurch gekennzeichnet, dass** der Reitstock kraftabhängig gelagert ist und im Betrieb der Maschine keine mechanische Kopplung zwischen Reitstock und Werkstückspindel erfolgt.

## Claims

1. A machine for honing gears, comprising
a) a workpiece spindle (54), the spindle axis of which is oriented vertically, wherein a workpiece to be machined is attachable in the region of a free end of the workpiece spindle (54);
b) a honing ring carrier (60) in which a honing ring for machining the workpiece attached to the workpiece spindle is clampable and drivable in rotation around its central axis;
c) a machine frame (10) on which the workpiece spindle and the honing ring carrier are mounted;
wherein
d) the machine frame (10) surrounds the honing ring carrier (60) and
e) the honing ring carrier is mounted at two bearing points (21, 22) on the machine frame, said bearing points being substantially diametrically opposite each other with regard to the honing ring carrier, so as to be movable in rotation around a horizontal axis which extends through the bearing points;
**characterised in that** the honing ring carrier (60) is mounted at said two bearing points (21, 22) on the machine frame (10), which are substantially diametrically opposite each other with regard to the honing ring carrier, so as to be movable linearly along the horizontal axis which extends through the bearing points (21, 22).

2. The machine according to claim 1, **characterised in that** the free end of the workpiece spindle is directed upwards and **in that** the workpiece spindle is surrounded by the machine frame.

3. The machine according to claim 2, **characterised in that** a drive (57) for the workpiece spindle is arranged beneath the free end of the workpiece spindle.

4. The machine according to one of claims 1 to 3, **characterised in that** the machine frame forms a substantially closed shell which encloses a working space.

5. The machine according to claims 3 and 4, **characterised in that** the machine frame is designed such that the working space can be closed at the top by way of a flat cover for operation of the machine.

6. The machine according to one of claims 1 to 5, **characterised in that** the machine frame is designed in a straight cylindrical manner, in particular a circular cylindrical manner.

7. The machine according to one of claims 1 to 6, **characterised in that** the bearing points comprise plain bearings or hydrostatic bearings.

8. The machine according to one of claims 1 to 7, **characterised by** a carrier (70) on which a first drive (73) for moving the honing ring carrier linearly along the horizontal axis extending through the bearing points and a second drive (71) for moving the honing ring carrier in rotation around this axis are arranged, wherein the carrier is arranged outside the machine frame and is displaceable along the horizontal axis together with the honing ring carrier.

9. The machine according to claim 8, **characterised in that** the first drive is coupled to a ball screw (30), wherein the ball screw is supported on the machine frame.

10. The machine according to claim 8 or 9, **characterised in that** a guide element is fixedly arranged on the carrier, wherein the guide element interacts with a further bearing point (23) on the machine frame.

11. The machine according to one of claims 1 to 10, **characterised in that** the machine frame is produced substantially from cast stone.

12. The machine according to one of claims 1 to 11, **characterised in that** the machine frame is produced substantially from steel.

13. The machine according to one of claims 1 to 12, **characterised in that** the workpiece spindle can execute a vertical stroke.

14. The machine according to one of claims 1 to 13, **characterised in that** the workpiece spindle is adjustable in the vertical direction and can be fixed in a desired vertical position.

15. The machine according to one of claims 1 to 14, **characterised by** a tailstock for interacting with the workpiece spindle.

16. The machine according to claim 15, **characterised in that** the tailstock is mounted in a force-dependent manner and no mechanical coupling between the tailstock and workpiece spindle occurs during operation of the machine.

## Revendications

1. Machine de rodage de roues dentées, comprenant
a) une broche porte-pièce (54) dont l'axe est orienté à la verticale, une pièce à usiner pouvant être agencée à proximité d'une extrémité libre de ladite broche porte-pièce (54),
b) un dispositif porte-meule (60) dans lequel une meule de rodage destinée à l'usinage de la pièce agencée sur la broche porte-pièce peut être montée et peut être entraînée en rotation sur son axe central,
c) un bâti (10) sur lequel sont supportés la broche porte-pièce et le dispositif porte-meule ;
dans laquelle machine
d) le bâti (10) entoure le dispositif porte-meule (60), et
e) le dispositif porte-meule est supporté en deux points de support (21, 22) du bâti sensiblement diamétralement opposés eu égard au dispositif porte-meule en étant mobile en rotation sur un axe horizontal passant par les points de support;
**caractérisée en ce que** le dispositif porte-meule (60) est supporté en lesdits deux points de support (21, 22) du bâti (10) sensiblement diamétralement opposés eu égard au dispositif porte-meule, en étant mobile en translation le long de l'axe horizontal passant par les points de support (21, 22).

2. Machine selon la revendication 1, **caractérisée en ce que** l'extrémité libre de la broche porte-pièce est dirigée vers le haut et **en ce que** la broche porte-pièce est entourée par le bâti.

3. Machine selon la revendication 2, **caractérisée en ce qu'**un système d'entraînement (57) de broche porte-pièce est agencé sous l'extrémité libre de la broche porte-pièce.

4. Machine selon l'une des revendications 1 à 3, **caractérisée en ce que** le bâti forme un corps sensiblement fermé renfermant un espace de travail.

5. Machine selon les revendications 3 et 4, **caractérisée en ce que** le bâti est conçu de manière que l'espace de travail puisse être fermé sur le haut par un couvercle plan en vue de l'exploitation de la machine.

6. Machine selon l'une des revendications 1 à 5, **caractérisée en ce que** le bâti a la forme d'un cylindre droit, notamment d'un cylindre circulaire.

7. Machine selon l'une des revendications 1 à 6, **caractérisée en ce que** les points de support comprennent des paliers lisses ou paliers hydrostatiques.

8. Machine selon l'une des revendications 1 à 7, **caractérisée par** un dispositif de support (70) sur lequel sont agencés un premier système d'entraînement (73) permettant un déplacement en translation du dispositif porte-meule le long de l'axe horizontal passant par les points de support et un deuxième système d'entraînement (71) permettant un mouvement en rotation du dispositif porte-meule sur ce même axe, ledit dispositif de support étant agencé extérieurement au bâti et étant déplaçable conjointement au dispositif porte-meule le long de l'axe horizontal.

9. Machine selon la revendication 8, **caractérisée en ce que** le premier système d'entraînement est couplé à une broche filetée à billes (30) elle-même en appui sur le bâti.

10. Machine selon la revendication 8 ou 9, **caractérisée en ce qu'**un élément de guidage est agencé fixe sur le dispositif de support, ledit élément de guidage coopérant avec un autre point de support (23) du bâti.

11. Machine selon l'une des revendications 1 à 10, **caractérisée en ce que** le bâti est réalisé sensiblement en pierre artificielle.

12. Machine selon l'une des revendications 1 à 11, **caractérisée en ce que** le bâti est réalisé sensiblement en acier.

13. Machine selon l'une des revendications 1 à 12, **caractérisée en ce que** la broche porte-pièce peut effectuer une course verticale.

14. Machine selon l'une des revendications 1 à 13, **caractérisée en ce que** la broche porte-pièce est réglable dans le sens vertical et peut être fixée à une position verticale souhaitée.

15. Machine selon l'une des revendications 1 à 14, **caractérisée par** une contre-pointe destinée à coopérer avec la broche porte-pièce.

16. Machine selon la revendication 15, **caractérisée en ce que** la contre-pointe est supportée selon une dépendance de force, et **en ce qu'**il ne se produit aucun couplage mécanique entre la contre-pointe et la broche porte-pièce pendant l'exploitation de la machine.
